# FASCICULE DE BREVET EUROPEEN

(11) **EP 4 572 223 B1**
(45) Date de publication et mention de la délivrance du brevet: **20.05.2026**
(21) Numéro de dépôt: 24209136.1
(22) Date de dépôt: 28.10.2024
(51) Int. Cl.: H04L 9/00

(54) **PROCÉDÉ POUR LE CALCUL D'UNE FONCTION DANS UN CONTEXTE BOÎTE BLEANCHE ET SYSTÈME ASSOCIÉ**
VERFAHREN ZUR DURCHRECHNUNG EINER FUNKTION IM WHITE-BOX KONTEXT UND SYSTEM DAFÜR
METHOD FOR COMPUTATION OF A FUNCTION IN A WHITE-BOX CONTEXT AND SYSTEM THEREFOR

(30) Priorité: 13.12.2023 FR 2314084
(43) Date de publication de la demande: 18.06.2025
(73) Titulaire: Idemia France, 92400 Courbevoie (FR)
(72) Inventeur: DOTTAX, Emmanuelle, 92400 Courbevoie (FR); GIRAUD, Christophe, 92400 Courbevoie (FR); BARBU, Guillaume, 92400 Courbevoie (FR)
(74) Mandataire: Idemia

(56) Documents cités:
- EP-B1- 3 210 332
- US-A1- 2016 182 472
- US-A1- 2022 417 001
- BEN A FISCH ET AL: "Iron: Functional Encryption using Intel SGX", IACR, INTERNATIONAL ASSOCIATION FOR CRYPTOLOGIC RESEARCH, vol. 20170428:221846, 29 April 2017 (2017-04-29), pages 1 - 37, XP061022762, DOI: 10.1145/3133956.3134106

## Description

La présente invention concerne un procédé pour effectuer une fonction sécurisée mettant en correspondance un message d'entrée avec un message de sortie, ainsi qu'un système associé.

Une fonction sécurisée, par exemple une fonction cryptographique, utilise de façon conventionnelle des données ayant vocation à rester secrètes, par exemple une clé cryptographique sous-jacente. Lorsqu'une fonction sécurisée est mise en œuvre au moyen d'un logiciel exécuté dans un environnement non sécurisé, des mesures particulières doivent être prises pour éviter qu'un attaquant puisse avoir accès aux données secrètes.

La recherche de techniques permettant de sécuriser la mise en œuvre d'une fonction dans un environnement non sécurisé est connue sous le nom de cryptographie en boîte blanche (en anglais : "white box cryptography").

Les implémentations logicielles qui permettent de sécuriser la mise en œuvre d'une fonction dans un environnement non sécurisé sont connues sous le nom d'implémentations en boite blanche. L'article "White Box Cryptography and an AES implementation", de S. Chow et al. in, Post-Proceedings of the 9th Annual Workshop on Selected Areas in Cryptography (SAC'02), 15-16 août 2002, propose par exemple une technique pour produire des algorithmes de type AES adaptés chacun à une clé cryptographique particulière.

Pour les solutions généralement proposées dans ce cadre, la fonction sécurisée est décomposée en une série de traitements élémentaires et des tables de correspondance (en anglais : "Look-Up Tables") associées respectivement à ces traitements élémentaires sont utilisées pour manipuler des données masquées.

Toutefois, une implémentation en boite blanche peut ne pas garantir un niveau de sécurité suffisant. Certaines fonctions sécurisées sont destinées à être exécutées dans des environnements agréés. Par exemple, une fonction sécurisée permettant l'accès à un véhicule, est censée n'être exécutée que sous l'environnement d'un utilisateur agréé.

Pour deviner les données secrètes de la fonction sécurisée, une attaque dite « par clonage » (« code lifting » en anglais) consiste à copier l'implémentation en boite blanche de la fonction sécurisée vers un environnement non sécurisé sous le contrôle complet d'un attaquant.

Dans un tel environnement, l'attaquant peut exécuter de très nombreuses itérations de la fonction sécurisée et/ou utiliser des outils, typiquement un outil de débogage, pour exécuter la fonction sécurisée par étape. En outre, avec une telle attaque l'attaquant peut se substituer à l'utilisateur agréé et substituer un environnement sous son contrôle à l'environnement agréé, par exemple pour accéder à un véhicule dudit utilisateur.

Pour contrer ce type d'attaque, une première solution décrite dans la demande de brevet US2019312718 consiste en une implémentation en boite blanche qui utilise sous forme déchiffrée une clé de cryptage codée reçue d'un environnement d'exécution de confiance.

Cette solution présente toutefois comme inconvénient d'être insuffisamment sécurisée ou de nécessiter une connexion avec un serveur pour recevoir une clé.

Une deuxième solution connue consiste en une implémentation en boite blanche qui envoie une donnée à un élément sécurisé. L'élément sécurisé calcule un résultat de l'application d'une fonction sur ladite donnée et l'implémentation en boite blanche vérifie ensuite que le résultat calculé par l'élément sécurisé correspond à l'application de la fonction sur ladite donnée (par exemple en calculant un autre résultat de l'application de la fonction sur ladite donnée ou de l'application de l'inverse de ladite fonction sur le résultat).

Cette deuxième solution a pour inconvénient d'être aussi insuffisamment sécurisée et d'être couteuse en ressources, typiquement en temps de calcul et en taille mémoire, pour l'environnement non sécurisé mettant en œuvre la solution.

Une troisième solution consiste à utiliser un élément sécurisé pour mettre à jour l'implémentation en boite blanche et modifier ainsi le comportement de ladite implémentation en boite blanche. Malheureusement la mise en œuvre de cette solution nécessite le remplacement d'une table de correspondance de l'implémentation en boite blanche, ce qui est couteux en ressources pour le système mettant en œuvre cette solution, notamment pour l'élément sécurisé.

Il est enfin connu de la technique le document EP 3 210 332 B1 (IRDETO BV [NL]) 30 août 2017 (2017-08-30) une méthode de contrôle d'accès consistant à déchiffrer en boite blanche un contenu chiffré avec une clé transformée, puis à le rechiffrer en boite blanche avant de le transmettre à un client d'un élément sécurisé.

Pour remédier à ces inconvénients, la présente invention propose selon un premier aspect, un procédé pour effectuer une fonction sécurisée mettant en correspondance un message d'entrée avec un message de sortie, le procédé étant mis en œuvre par un système comprenant un élément sécurisé et une implémentation en boîte blanche dans un environnement d'exécution non sécurisé, le procédé comprenant les étapes suivantes :
- calcul d'une donnée de traitement à partir du message d'entrée par l'implémentation en boîte blanche,
- chiffrement de la donnée de traitement en utilisant une clé de chiffrement, par l'implémentation en boîte blanche,
- envoi de la donnée de traitement chiffrée à l'élément sécurisé,
- obtention par l'élément sécurisé d'une donnée résultat à partir de la donnée de traitement chiffrée et d'une clé de déchiffrement associée à la clé de chiffrement, la donnée résultat étant l'image de la donnée de traitement par une fonction intermédiaire différente de la fonction identité,
- calcul du message de sortie à partir de la donnée résultat,
et le procédé étant caractérisé en ce que :
l'obtention par l'élément sécurisé de la donnée résultat, est par déchiffrement fonctionnel de la donnée de traitement chiffrée en utilisant une clé de déchiffrement fonctionnel pour la fonction intermédiaire, la clé de déchiffrement étant ladite clé de déchiffrement fonctionnel pour la fonction intermédiaire.

D'autres caractéristiques avantageuses et non limitatives du procédé conforme à l'invention, prises individuellement ou selon toutes les combinaisons techniquement possibles, sont les suivantes :
- le message de sortie comprend la donnée résultat ;
- le procédé comprenant en outre une étape de calcul d'au moins une autre donnée de traitement par l'implémentation en boîte blanche, et le message de sortie comprend en outre l'autre donnée de traitement ;
   - - l'implémentation en boite blanche a une première partie et une deuxième partie, le calcul d'une donnée de traitement à partir du message d'entrée et le chiffrement de la donnée de traitement en utilisant une clé de chiffrement, sont mis en œuvre par la première partie de l'implémentation en boite blanche, le calcul du message de sortie à partir de la donnée résultat est mis en œuvre par la deuxième partie de l'implémentation en boite blanche, et le procédé comprend en outre une étape d'envoi de la donnée résultat à la deuxième partie de l'implémentation en boite blanche ;
- le procédé comprend en outre le calcul d'au moins une autre donnée de traitement par la première partie de l'implémentation en boîte blanche, et l'utilisation de l'au moins une autre donnée de traitement par la deuxième partie de l'implémentation en boîte blanche pour le calcul du message de sortie à partir de la donnée résultat ;
- la clé de chiffrement est une clé publique d'un algorithme RSA et la clé de déchiffrement fonctionnel est obtenue à partir d'une clé privée dudit algorithme RSA, la clé privé étant associée à la clé publique, l'algorithme RSA ayant un module de chiffrement déterminé et la fonction intermédiaire étant une exponentiation modulaire élevant la donnée de traitement à un exposant déterminé modulo le module de chiffrement déterminé ;
- la clé de chiffrement comprend un exposant de chiffrement et la clé de déchiffrement fonctionnel comprend un inverse modulaire de l'exposant de chiffrement et l'exposant déterminé, ou le résultat du produit de l'exposant de chiffrement par l'exposant déterminé ;
- la clé de chiffrement n'intervient que dans l'étape de chiffrement de la donnée de traitement par l'implémentation en boîte blanche, et la clé de déchiffrement n'intervient que dans l'étape d'obtention d'une donnée résultat par l'élément sécurisé ;
- la fonction sécurisée se compose d'une suite d'opérations et la fonction intermédiaire est une partie de ladite suite d'opérations ;
- la fonction sécurisée est une fonction cryptographique mettant en correspondance le message d'entrée avec le message de sortie à l'aide d'une clé cryptographique prédéterminée ;
- la clé cryptographique prédéterminée est une clé distincte de la clé de chiffrement et de la clé de déchiffrement.

Au moins une partie des procédés selon l'invention peut être mise en œuvre par ordinateur. En conséquence, la présente invention peut prendre la forme d'un mode de réalisation combinant des aspects logiciels (comportant les microprogrammes, les logiciels résidents, les microcodes, etc.) et matériels qui peuvent tous être globalement appelés ici "composant".

Selon un deuxième aspect, l'invention propose un système pour effectuer une fonction sécurisée mettant en correspondance un message d'entrée avec un message de sortie, le système étant caractérisé en ce qu'il comprend :
- un premier composant comprenant tout ou partie d'une implémentation en boite blanche dans un environnement d'exécution non sécurisé, ladite toute ou partie de l'implémentation en boite blanche étant configurée pour calculer une donnée de traitement à partir du message d'entrée et chiffrer la donnée de traitement en utilisant une clé de chiffrement,
- un élément sécurisé configuré pour recevoir la donnée de traitement chiffrée et obtenir une donnée résultat à partir de la donnée de traitement chiffrée et d'une clé de déchiffrement associée à la clé de chiffrement, la donnée résultat étant l'image de la donnée de traitement par une fonction intermédiaire différente de la fonction identité,
- un deuxième composant configuré pour recevoir la donnée résultat et calculer le message de sortie à partir de la donnée résultat,
l'obtention par l'élément sécurisé de la donnée résultat, étant par déchiffrement fonctionnel de la donnée de traitement chiffrée en utilisant une clé de déchiffrement fonctionnel pour la fonction intermédiaire, la clé de déchiffrement étant ladite clé de déchiffrement fonctionnel pour la fonction intermédiaire.

D'autres caractéristiques avantageuses et non limitatives du système conforme à l'invention, prises individuellement ou selon toutes les combinaisons techniquement possibles, sont les suivantes :
- le message de sortie comprend la donnée résultat ;
- l'implémentation en boite blanche a une première partie et une deuxième partie, ladite toute ou partie de l'implémentation en boite blanche du premier composant est la première partie de l'implémentation en boite blanche, le deuxième composant comprend la deuxième partie de l'implémentation en boite blanche dans l' environnement d'exécution non sécurisé, la deuxième partie de l'implémentation en boite blanche étant configurée pour recevoir la donnée résultat et calculer le message de sortie à partir de la donnée résultat.

Ce système peut être configuré pour la mise en œuvre de chacune des possibilités de réalisation envisagées pour le procédé tel que défini précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres caractéristiques et avantages de la présente invention ressortiront de la description faite ci-dessous, en référence aux figures annexées qui en illustrent des exemples de réalisation dépourvus de tout caractère limitatif.

Sur les figures :
Figure 1 représente schématiquement un mode de réalisation préféré d'un système selon l'invention, notamment pour la mise en œuvre d'un procédé selon l'invention ;
Figure 2 illustre sous forme de logigramme les étapes principales d'un procédé pour effectuer une fonction sécurisée selon l'invention ;
Figure 3 illustre un exemple de fonction sécurisée effectuée par un procédé ou un système selon l'invention.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

Dans le cadre de la présente description, des qualificatifs « premier », « deuxième », « troisième » et « quatrième » ne sont qu'à titre indicatif pour distinguer des éléments qu'ils qualifient, mais n'impliquent pas d'ordre entre eux.

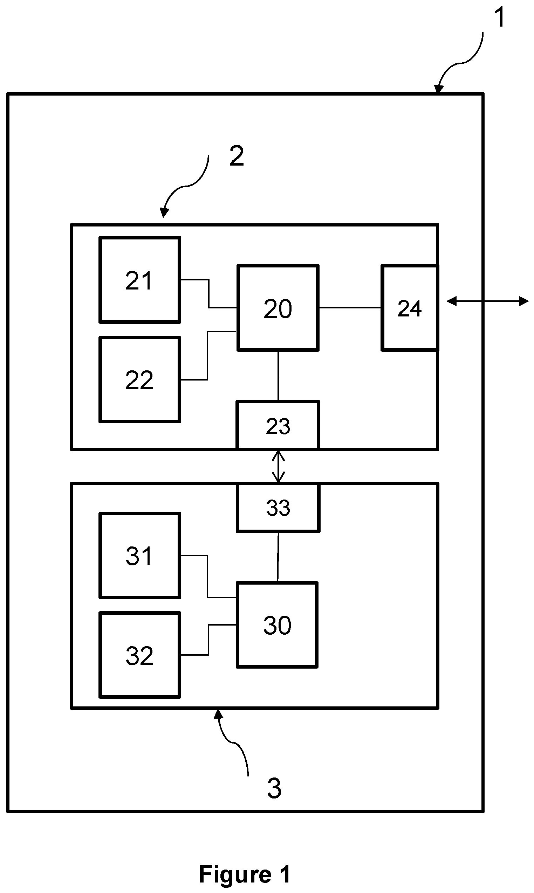

La figure 1 représente schématiquement un mode de réalisation préféré d'un système 1 selon l'invention.

Le système 1 comprend un environnement d'exécution non sécurisé 2 et un élément sécurisé 3.

Le système 1 est adapté pour effectuer une fonction sécurisée mettant en correspondance un message d'entrée avec un message de sortie.

L'environnement d'exécution non sécurisé 2 comprend un moyen de traitement de données 20 de type processeur, un moyen de stockage de données 21, une mémoire vive 22, une première interface de communication 23 et une deuxième interface de communication 24.

Le moyen de stockage de données 21 et la mémoire vive 22 de l'environnement d'exécution non sécurisé 2 sont chacun liés au moyen de traitement de données 20 dudit environnement d'exécution non sécurisé 2, de sorte que le moyen de traitement de données 20 peut lire ou écrire des données dans le moyen de stockage de données 21 et/ou la mémoire vive 22.

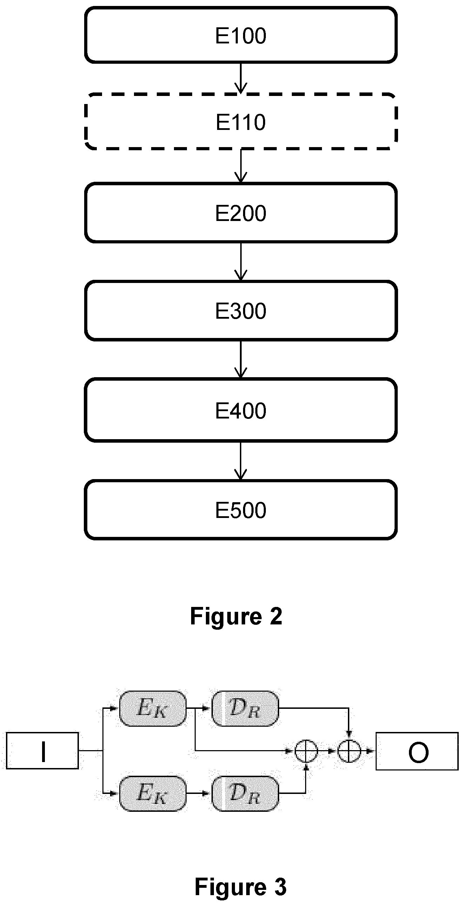

Le moyen de stockage de données 21 mémorise des instructions de programme d'ordinateur, dont certaines sont conçues pour mettre en œuvre des étapes d'un procédé pour effectuer une fonction sécurisée tel que décrit en référence à la figure 2 lorsque ces instructions sont exécutées par le moyen de traitement de données 20.

Le moyen de stockage de données 21 est par exemple en pratique un disque dur ou une mémoire non-volatile, éventuellement réinscriptible, par exemple de type EEPROM (pour "Electrically Erasable and Programmable Read-Only Memory" selon l'appellation anglo-saxonne couramment utilisée).

En outre, le moyen de stockage de données 21 et la mémoire vive 22 peuvent mémoriser certains au moins des éléments (notamment la donnée de traitement chiffrée et la donnée résultat telles que décrites ci-après en référence à la figure 2) manipulés lors des différents traitements effectués au cours du procédé décrit ci-après.

On appelle mémoire dans la suite de la description, l'un quelconque parmi le moyen de stockage de données 21 et la mémoire vive 22.

L'environnement d'exécution non sécurisé 2 comporte également plusieurs composants non représentés.

Typiquement, l'environnement d'exécution non sécurisé 2 comprend un premier composant et un deuxième composant.

Ces composants peuvent en pratique être réalisés par une combinaison d'éléments matériels et d'éléments logiciels.

Chaque composant est configuré pour réaliser une étape d'un procédé conforme à l'invention, et possède donc une fonctionnalité décrite dans le procédé conforme à l'invention et exposé ci-après. Le premier composant comprend tout ou partie d'une implémentation en boite blanche.

Le système 1 comprend donc une implémentation en boite blanche dans l'environnement d'exécution non sécurisé 2. Le système 1, typiquement l'environnement d'exécution non sécurisé 2, mémorise l'implémentation en boite blanche.

Selon un premier exemple de réalisation des composants, l'implémentation en boite blanche a une première partie et une deuxième partie, ladite toute ou partie de l'implémentation en boite blanche du premier composant est la première partie de l'implémentation en boite blanche, et le deuxième composant comprend la deuxième partie de l'implémentation en boite blanche.

Selon un deuxième exemple de réalisation des composants, le premier composant comprend tout ou partie de l'implémentation en boite blanche, et le deuxième composant ne comprend pas tout ou partie de l'implémentation en boite blanche.

Pour chaque composant, l'environnement d'exécution non sécurisé 2 mémorise par exemple des instructions de logiciel (également nommées instructions de programme d'ordinateur) exécutables par le moyen de traitement de 20 afin d'utiliser un élément matériel (par exemple une mémoire) et de mettre ainsi en œuvre la fonctionnalité offerte par le composant.

Selon une possibilité de réalisation, les instructions de programme d'ordinateur mémorisées dans le moyen de stockage de donnée 21 ont été reçues (par exemple d'un ordinateur distant via la deuxième interface de communication 24) lors d'une phase de fonctionnement de l'environnement d'exécution non sécurisé 2, antérieure au procédé décrit en référence à la figure 2.

Le moyen de traitement de données 20 est donc configuré pour mettre en œuvre certaines étapes du procédé pour effectuer une fonction sécurisée, qui sera décrit plus loin.

Le moyen de traitement de données 20 peut avoir n'importe quelle structure. Le moyen de traitement de données 20 comprend un ou plusieurs cœurs, chaque cœur étant configuré pour exécuter des instructions de code d'un programme de manière à mettre en œuvre les étapes précitées.

La première interface de communication 23 est reliée au moyen de traitement de données 20 de manière à permettre à l'environnement d'exécution non sécurisé 2 de communiquer avec l'élément sécurisé 3 via une autre interface de communication 33 de l'élément sécurisé 3.

La première interface de communication est de type quelconque. Elle est par exemple une interface filaire moyennant un protocole de communication quelconque, par exemple de type OPC (pour « Open Platform Communications » en terminologie anglo-saxonne), ou selon la norme ISO/IEC 7816 dans une de ses versions déjà publiées.

La première interface de communication 23 permet à l'environnement d'exécution non sécurisé 2 d'envoyer des données à l'élément sécurisé 3, par exemple une donnée de traitement chiffrée telle que décrite en référence à la figure 2, et/ou de recevoir des données en provenance de l'élément sécurisé 3, par exemple une donnée résultat telle que décrite en référence à la figure 2.

La deuxième interface de communication 24 est reliée au moyen de traitement de données 20 de manière à permettre au moyen de traitement de données 20 de recevoir un message d'entrée en provenance d'un dispositif électronique non représenté et/ou d'envoyer un message de sortie audit dispositif électronique non représenté.

La deuxième interface de communication 24 est de type quelconque. Elle est par exemple filaire (Ethernet) ou de type radio sans fil moyennant un protocole de communication quelconque (Wi-Fi, Bluetooth, NFC, etc.).

L'élément sécurisé 3 comprend un autre moyen de traitement de données 30 de type processeur, un autre moyen de stockage de données 31, une autre mémoire vive 32 et l'autre interface de communication 33.

L'autre moyen de stockage de données 31 et l'autre mémoire vive 32 de l'élément sécurisé 3 sont chacun liés à l'autre moyen de traitement de données 30 dudit élément sécurisé 3, de sorte que l'autre moyen de traitement de données 30 peut lire ou écrire des données dans l'autre moyen de stockage de données 31 et/ou l'autre mémoire vive 32.

L'autre moyen de stockage de données 31 mémorise des instructions de programme d'ordinateur, dont certaines sont conçues pour mettre en œuvre des étapes d'un procédé pour effectuer une fonction sécurisée tel que décrit en référence à la figure 2 lorsque ces instructions sont exécutées par l'autre moyen de traitement de données 30.

L'autre moyen de stockage de données 31 est par exemple en pratique une mémoire non-volatile, éventuellement réinscriptible, par exemple de type EEPROM (pour "Electrically Erasable and Programmable Read-Only Memory" selon l'appellation anglo-saxonne couramment utilisée).

En outre, l'autre moyen de stockage de données 31 et l'autre mémoire vive 32 peuvent mémoriser certains au moins des éléments (notamment la donnée de traitement chiffrée et la donnée résultat telles que décrites ci-après en référence à la figure 2) manipulés lors des différents traitements effectués au cours du procédé décrit ci-après.

On appelle autre mémoire dans la suite de la description, l'un quelconque parmi l'autre moyen de stockage de données 31 et l'autre mémoire vive 32.

L'élément sécurisé 3 mémorise par exemple des instructions de logiciel exécutables par l'autre moyen de traitement de 30 afin d'utiliser un élément matériel (par exemple une autre mémoire) et de mettre ainsi en œuvre une, ou plusieurs, étape des procédés conformes à l'invention, et donc une, ou plusieurs, fonctionnalité décrite dans le procédé conforme à l'invention et exposé ci-après. Selon une possibilité de réalisation, les instructions de programme d'ordinateur mémorisées dans l'autre moyen de stockage de donnée 31 ont été reçues (par exemple d'un autre ordinateur distant, ou de l'environnement d'exécution non sécurisé 2, via l'autre interface de communication 33,) lors d'une phase de fonctionnement de l'élément sécurisé 3 antérieure au procédé décrit en référence à la figure 2.

L'autre moyen de traitement de données 30 est donc configuré pour mettre en œuvre certaines étapes du procédé pour effectuer une fonction sécurisée, qui sera décrit plus loin.

L'autre moyen de traitement de données 30 peut avoir n'importe quelle structure. L'autre moyen de traitement de données 30 comprend un ou plusieurs cœurs, chaque cœur étant configuré pour exécuter des instructions de code d'un programme de manière à mettre en œuvre les étapes précitées.

L'autre interface de communication 33 est reliée à l'autre moyen de traitement de données 30 de manière à permettre à l'élément sécurisé 3 de communiquer avec l'environnement d'exécution non sécurisé 2 via la première interface de communication 23 de l'environnement d'exécution non sécurisé 2.

L'autre interface de communication 33 est du même type que la première interface de communication 23. Elle est par exemple une interface de filaire moyennant un protocole de communication, par exemple de type OPC (pour « Open Platform Communications » en terminologie anglo-saxonne), ou selon la norme ISO/IEC 7816 dans une de ses versions déjà publiées.

L'autre interface de communication 33 permet à l'élément sécurisé 3 d'envoyer des données à l'environnement d'exécution non sécurisé 2, par exemple une donnée résultat telle que décrite en référence à la figure 2, et/ou de recevoir des données en provenance de l'environnement d'exécution non sécurisé 2, par exemple une donnée de traitement chiffrée telle que décrite en référence à la figure 2.

Selon un premier exemple, l'environnement non sécurisé 2 est un terminal de communication, un ordinateur personnel, une tablette ou un serveur, et l'élément sécurisé 3 est une puce intégrée dans une carte à puce, telle qu'une carte d'identité, une carte bancaire ou une carte à circuit intégré universelle (également connue sous le nom de carte UICC pour « Universal Integrated Circuit Card » en terminologie anglo-saxonne) telle qu'une carte d'abonné à un réseau cellulaire, typiquement une carte SIM.

Selon un deuxième exemple, le système 1 est un terminal de communication, un ordinateur personnel, une tablette ou un serveur, et l'élément sécurisé 3 est un microcontrôleur sécurisé ou un environnement d'exécution de confiance (« Trusted Execution Environment » en terminologie Anglosaxonne, aussi dénommé par l'acronyme TEE) qui est intégré audit terminal de communication, ordinateur personnel, tablette ou serveur.

La figure 2 illustre sous forme de logigramme les étapes principales d'un procédé pour effectuer une fonction sécurisée selon l'invention.

Ce procédé est mis en œuvre par le système 1.

La fonction sécurisée met en correspondance un message d'entrée avec un message de sortie.

La fonction sécurisée peut être une fonction cryptographique mettant en correspondance le message d'entrée avec le message de sortie à l'aide d'une clé cryptographique prédéterminée.

La fonction cryptographique comprend par exemple une fonction de chiffrement, une fonction de déchiffrement, une fonction de signature ou une fonction de vérification de signature avec la clé cryptographique prédéterminée. La clé cryptographique prédéterminée est alors de préférence une clé distincte de la clé de chiffrement et de la clé de déchiffrement décrites ci-après.

Selon une étape de calcul d'une donnée de traitement (étape E100), une donnée de traitement est calculée à partir du message d'entrée par l'implémentation en boîte blanche.

Selon une possibilité, la donnée de traitement peut être le message d'entrée ou une première partie du message d'entrée.

Selon une autre possibilité, la donnée de traitement peut être le résultat de l'application d'une première autre fonction au message d'entrée ou à une première partie du message d'entrée.

Le procédé peut comprendre alors une étape de calcul d'au moins une autre donnée de traitement (étape E110) pendant laquelle au moins une autre donnée de traitement est calculée par l'implémentation en boîte blanche.

Selon une première possibilité, l'autre donnée de traitement peut être le message d'entrée ou une deuxième partie du message d'entrée.

Selon une deuxième possibilité, l'autre donnée de traitement peut être le résultat de l'application d'une deuxième autre fonction au message d'entrée, à une deuxième partie du message d'entrée, à la donnée de traitement ou à une première partie de la donnée de traitement.

Cette étape de calcul d'au moins une autre donnée de traitement est optionnelle et peut être omise. Le procédé comprend alors une étape de chiffrement (étape E200) pendant laquelle l'implémentation en boîte blanche chiffre la donnée de traitement en utilisant une clé de chiffrement.

Typiquement, le chiffrement est selon un algorithme cryptographique asymétrique, par exemple RSA ou à base de courbes elliptiques.

Quand le chiffrement est selon un algorithme cryptographique asymétrique, la clé de chiffrement est une clé publique au sens dudit algorithme cryptographique asymétrique.

Le procédé comprend alors une étape (étape E300) d'envoi de la donnée de traitement chiffrée à l'élément sécurisé 3 du système 1, la donnée de traitement chiffrée étant le résultat du chiffrement mis en œuvre par l'implémentation en boîte blanche pendant l'étape de chiffrement (étape E200). Typiquement, l'environnement d'exécution non sécurisé 2 du système 1 envoie la donnée de traitement chiffrée à l'élément sécurisé 3 via la première interface de communication 23, et l'élément sécurisé 3 reçoit la donnée de traitement chiffrée via l'autre interface de communication 33.

Le procédé comprend alors une étape d'obtention (étape E400) pendant laquelle l'élément sécurisé 3 obtient une donnée résultat à partir de la donnée de traitement chiffrée et d'une clé de déchiffrement associée à la clé de chiffrement, la donnée résultat étant l'image de la donnée de traitement, c'est-à-dire de la donnée de traitement non chiffrée, par une fonction intermédiaire différente de la fonction identité.

Le chiffrement de l'étape de chiffrement (étape E200) est selon un algorithme cryptographique asymétrique, par exemple RSA ou à base de courbes elliptiques, l'élément sécurisé 3 peut obtenir la donnée résultat à partir de la donnée de traitement chiffrée et d'une clé de déchiffrement associée à la clé de chiffrement, en déchiffrant la donnée de traitement chiffrée selon ledit algorithme cryptographique asymétrique avec ladite clé de déchiffrement. La clé de déchiffrement est alors une clé privée au sens dudit algorithme cryptographique asymétrique.

De plus, l'algorithme cryptographique asymétrique est un algorithme de chiffrement fonctionnel. L'obtention par l'élément sécurisé 3 de la donnée résultat, est par déchiffrement fonctionnel de la donnée de traitement chiffrée en utilisant une clé de déchiffrement fonctionnel pour la fonction intermédiaire, la clé de déchiffrement étant ladite clé de déchiffrement fonctionnel pour la fonction intermédiaire.

Le procédé est ainsi davantage sécurisé. La fonction intermédiaire est dissimulée dans la clé de déchiffrement fonctionnelle, ce qui renforce sa confidentialité.

Le procédé permet en outre de limiter les temps de calcul et l'espace mémoire consommé pour l'élément sécurisé, la mise en œuvre du déchiffrement appliquant la fonction intermédiaire à la donnée de traitement.

Des exemples d'algorithmes de chiffrement fonctionnel sont décrits dans le document « Simple Functional Encryption Schemes for Inner Products», Michel Abdalla, Florian Bourse, Angelo De Caro, and David Pointcheval, DOI : 10.1007/978-3-662-46447-2_33.

L'algorithme de la section 3 de ce document, nommée « Inner-Product from DDH », permet ainsi l'obtention d'une donnée intermédiaire ayant pour valeur un générateur *g* élevé à une puissance égale au produit de la donnée de traitement (x dans le document cité) par une autre donnée prédéterminée (y dans le document cité), le générateur *g* appartenant à un groupe d'ordre *p* avec *p* un nombre premier. La donnée résultat peut être la donnée intermédiaire, la fonction intermédiaire étant alors l'élévation du générateur *g* à une puissance égale au produit de la donnée de traitement (*x* dans le document cité) par une autre donnée prédéterminée *(y* dans le document cité). Selon une autre possibilité, la donnée résultat peut être obtenue par l'élément sécurisé 3 à partir de la donnée intermédiaire, par exemple par logarithme discret de la donnée intermédiaire, la donnée résultat ayant alors pour valeur le résultat du produit de la donnée de traitement par l'autre donnée prédéterminée et la fonction intermédiaire étant le produit de la donnée de traitement par l'autre donnée prédéterminée. On notera que la clé de déchiffrement et la clé de chiffrement sont respectivement sk_{y} et mpk dans la section 3 du document cité.

De manière préférée, l'algorithme de chiffrement fonctionnel est un algorithme RSA ayant un module de chiffrement déterminé *N* et la fonction intermédiaire est une exponentiation modulaire élevant la donnée de traitement à un exposant déterminé modulo le module de chiffrement déterminé.

Ainsi, la clé de chiffrement est une clé publique d'un algorithme RSA et la clé de déchiffrement fonctionnel est obtenue à partir d'une clé privée dudit algorithme RSA, la clé privée étant associée à la clé publique, l'algorithme RSA ayant un module de chiffrement déterminé et la fonction intermédiaire étant une exponentiation modulaire élevant la donnée de traitement à un exposant déterminé modulo le module de chiffrement déterminé.

Le procédé permet ainsi une mise en œuvre simple et peu couteuse en ressource de la fonction intermédiaire par déchiffrement fonctionnel.

Typiquement, la clé de chiffrement comprend un exposant de chiffrement e et la clé de déchiffrement fonctionnel comprend un inverse modulaire *d* de l'exposant de chiffrement e et l'exposant déterminé *a*, ou le résultat du produit de l'exposant de chiffrement par l'exposant déterminé, c'est-à-dire *a* × *d.*

Ainsi, pendant l'étape de chiffrement (étape E200), l'implémentation en boîte blanche peut chiffrer la donnée de traitement comme suit : *u = x^{e} mod N,* avec *x* la donnée de traitement et *u* la donnée de traitement chiffrée.

Pendant l'étape d'obtention (étape E400) l'élément sécurisé 3 peut obtenir la donnée résultat comme suit : *z* = *u*^{*a*×}*^{d} mod N,* avec *z* la donnée résultat.

La donnée résultat *z* a donc pour valeur *x^{a} mod N* . Autrement dit, la fonction intermédiaire est une exponentiation modulaire élevant la donnée de traitement *x* à l'exposant déterminé *a* modulo le module de chiffrement déterminé *N.*

L'exposant déterminé *a* est un entier, par exemple 2.

De manière préférée, la fonction intermédiaire ne met pas en œuvre tout ou partie de la clé cryptographique.

On a ainsi plus de liberté pour choisir la fonction sécurisée et la clé cryptographique, déployer la clé cryptographique, et gérer les accès associés.

Le procédé comprend alors une étape de calcul du message de sortie (étape E500), pendant laquelle le système 1, calcule le message de sortie à partir de la donnée résultat.

Selon mode particulier de réalisation du procédé, typiquement quand le premier composant et le deuxième composant du système 1 sont réalisés selon le premier exemple de réalisation des composants décrit en référence à la figure 1, l'implémentation en boite blanche a une première partie et une deuxième partie, le calcul (étape E100) d'une donnée de traitement à partir du message d'entrée et le chiffrement (étape E200) de la donnée de traitement en utilisant une clé de chiffrement, sont mis en œuvre par la première partie de l'implémentation en boite blanche, et le calcul (étape E500) du message de sortie à partir de la donnée résultat est mis en œuvre par la deuxième partie de l'implémentation en boite blanche.

Le procédé comprend alors, typiquement entre l'étape d'obtention (étape E400) et l'étape de calcul du message de sortie (étape E500), une étape (non représentée) d'envoi de la donnée résultat à la deuxième partie de l'implémentation en boîte blanche.

Typiquement, l'élément sécurisé 3 du système 1 envoie la donnée résultat à la deuxième partie de l'implémentation en boîte blanche, en envoyant la donnée résultat à l'environnement d'exécution non sécurisé 2 du système 1 via l'autre interface de communication 33, l'environnement d'exécution non sécurisé, et la deuxième partie de l'implémentation en boîte blanche, recevant la donnée résultat via la première interface de communication 23.

Selon un autre mode particulier de réalisation du procédé, typiquement quand le premier composant et le deuxième composant du système 1 sont réalisés selon le deuxième exemple de réalisation des composants décrit en référence à la figure 1, le calcul (étape E500) du message de sortie à partir de la donnée résultat n'est pas mis en œuvre par tout ou partie de l'implémentation en boite blanche. Le procédé peut comprendre alors, typiquement entre l'étape d'obtention (étape E400) et l'étape de calcul du message de sortie (étape E500), une étape (non représentée) d'envoi de la donnée résultat à l'environnement non sécurisé 2.

Typiquement, l'élément sécurisé 3 du système 1 peut envoyer la donnée résultat à l'environnement non sécurisé 2 du système 1 via l'autre interface de communication 33, l'environnement d'exécution non sécurisé 2 recevant la donnée résultat via la première interface de communication 23.

De préférence, quand le procédé est selon l'autre mode particulier de réalisation, le message de sortie comprend la donnée résultat. Le message de sortie peut être la donnée résultat.

Le procédé, notamment selon le mode particulier de réalisation ou l'autre mode particulier de réalisation décrits ci-avant, permet de limiter les temps de calcul et l'espace mémoire consommé, notamment par l'implémentation boite blanche.

Le message de sortie est calculé à partir de la donnée résultat.

L'étape d'obtention (étape E400) mise en œuvre par l'élément sécurisé 3 contribue aux calculs de la fonction sécurisée en obtenant la donnée résultat à partir de la donnée de traitement.

Le système 1, notamment la deuxième partie de l'implémentation en boite blanche, n'a pas besoin de vérifier que la donnée résultat correspond au résultat de l'application de la fonction intermédiaire à la donnée de traitement. Si la donnée résultat ne correspond pas au résultat de l'application de la fonction intermédiaire à la donnée de traitement, le message de sortie obtenu sera erroné. En effet, le message de sortie ne sera pas l'image du message d'entrée par la fonction sécurisée.

Le calcul de l'étape de calcul d'une donnée de traitement (étape E100), la fonction intermédiaire et le calcul de l'étape de calcul du message de sortie (E500) sont donc choisis de sorte à mettre en œuvre la fonction sécurisée.

Le procédé est en outre particulièrement sécurisé.

Un attaquant observant les échanges de données entre l'implémentation en boite blanche (et/ou l'environnement non sécurisé 2) et l'élément sécurisé 3 n'accède pas à la donnée de traitement et ne peut pas en déduire la fonction intermédiaire, car la donnée de traitement est chiffrée.

Au sein du système 1, la clé de chiffrement est de préférence uniquement intégrée dans l'implémentation en boite blanche et n'est pas stockée en tant que telle dans la mémoire du système 1.

Quand le procédé est selon le mode particulier de réalisation décrit ci-avant, la clé de chiffrement est de préférence uniquement intégrée dans la première partie de l'implémentation en boite blanche et n'est pas stockée en tant que telle dans la mémoire du système 1.

Au sein du système 1, la clé de déchiffrement est de préférence stockée uniquement dans l'élément sécurisé 3 et n'est pas intégrée dans l'implémentation en boite blanche.

De manière également préférée, la clé de chiffrement n'intervient que dans l'étape de chiffrement de la donnée de traitement (étape E200) par l'implémentation en boîte blanche, et la clé de déchiffrement n'intervient que dans l'étape d'obtention (étape E400) d'une donnée résultat par l'élément sécurisé.

Le procédé est ainsi davantage sécurisé.

Comme déjà mentionné, le système 1, notamment la deuxième partie de l'implémentation en boite blanche, n'a pas besoin de vérifier que la donnée résultat correspond au résultat de l'application de la fonction intermédiaire à la donnée de traitement. Si la donnée résultat ne correspond pas au résultat de l'application de la fonction intermédiaire à la donnée de traitement, le message de sortie obtenu sera erroné. En effet, le message de sortie ne sera pas l'image du message d'entrée par la fonction sécurisée.

De préférence, le calcul du message de sortie à partir de la donnée résultat pendant l'étape de calcul du message de sortie (étape E500), diffère d'une application à la donnée résultat, d'une fonction inverse de la fonction intermédiaire.

En outre, quand le procédé est selon le mode particulier de réalisation décrit ci-avant, le calcul (étape E500) du message de sortie à partir de la donnée résultat diffère de la fonction identité.

Le procédé est ainsi davantage sécurisé.

Quand le procédé est selon le mode particulier de réalisation et que le procédé comprend l'étape de calcul d'au moins une autre donnée de traitement (étape E110), ladite étape de calcul d'au moins une autre donnée de traitement (étape E110) est mise en œuvre par la première partie de l'implémentation en boite blanche, et la deuxième partie de l'implémentation en boîte blanche utilise avantageusement l'au moins une autre donnée de traitement pour le calcul du message de sortie à partir de la donnée résultat (étape E500).

De façon également avantageuse, quand le procédé est selon l'autre mode particulier de réalisation décrit ci-avant et que le procédé comprend l'étape de calcul d'au moins une autre donnée de traitement (étape E110), le message de sortie comprend en outre l'autre donnée de traitement.

Le procédé est ainsi davantage sécurisé.

L'étape de calcul d'au moins une autre donnée de traitement (étape E110) contribue aux calculs de la fonction sécurisée en obtenant l'autre donnée de traitement. Le calcul de l'au moins une autre donnée de traitement, le cas échéant la deuxième autre fonction, est choisi de sorte à mettre en œuvre la fonction sécurisée.

On notera que dans le procédé pour effectuer une fonction sécurisée selon l'invention, et/ou dans le système 1 selon l'invention, la fonction sécurisée peut se composer d'une suite d'opérations, la fonction intermédiaire étant une partie de ladite suite d'opérations.

Typiquement, la fonction sécurisée se compose d'une suite d'opérations mises en œuvre sur des données d'entrée.

Une opération peut être une opération arithmétique ou une opération arithmétique booléenne, par exemples une addition, une soustraction, une multiplication, une division, une exponentiation, un logarithme.

Une opération peut également être une opération logique, par exemples la disjonction, la conjonction ou la négation.

Une donnée d'entrée peut comprendre tout ou partie du message d'entrée, et/ou tout ou partie d'au moins une donnée intermédiaire.

Une donnée intermédiaire est le résultat de l'application d'une opération de ladite suite d'opérations à au moins une donnée d'entrée.

Le calcul (étape E100) de la donnée de traitement à partir du message d'entrée, par l'implémentation en boite blanche, consiste alors en l'application d'une première partie de la suite d'opérations qui composent la fonction sécurisée.

La donnée de traitement est ainsi une donnée intermédiaire.

La première partie de la suite d'opérations qui composent la fonction sécurisée, comporte au moins une opération de ladite suite d'opérations qui composent la fonction sécurisée.

Typiquement, l'application d'une première autre fonction au message d'entrée ou à une première partie du message d'entrée consiste en la première partie de la suite d'opérations qui composent la fonction sécurisée.

L'étape d'obtention (étape E400) mise en œuvre par l'élément sécurisé réalise alors une deuxième partie de la suite d'opérations qui composent la fonction sécurisée, ladite deuxième partie de la suite d'opérations qui composent la fonction sécurisée constituant la fonction intermédiaire appliquée à la donnée de traitement.

La deuxième partie de la suite d'opérations qui composent la fonction sécurisée, comporte au moins une opération de ladite suite d'opérations qui composent la fonction sécurisée.

La deuxième partie de la suite d'opérations qui composent la fonction sécurisée est typiquement disjointe de la première partie de la suite d'opérations décrite ci-avant.

La donnée de traitement est une donnée d'entrée pour la fonction intermédiaire.

La donnée résultat est le résultat de la mise en œuvre de ladite deuxième partie de la suite d'opérations qui composent la fonction sécurisée. La donnée résultat est donc une donnée intermédiaire.

Quand le procédé est selon le mode particulier de réalisation décrit ci-avant, la donnée résultat est alors utilisée pour une donnée d'entrée d'au moins une opération d'une troisième partie de la suite d'opérations qui composent la fonction sécurisée.

Ladite au moins une opération d'une troisième partie de la suite d'opérations est mise en œuvre dans le calcul (étape E500) du message de sortie à partir de la donnée résultat, par la deuxième partie de l'implémentation en boîte blanche.

La troisième partie de la suite d'opérations qui composent la fonction sécurisée est typiquement disjointe de la première partie de ladite suite d'opérations et de la deuxième partie de ladite suite d'opérations, décrites ci-avant.

Quand le procédé est selon l'autre mode particulier de réalisation décrit ci-avant, la donnée résultat peut être utilisée pour une donnée d'entrée d'au moins une opération d'une troisième partie de la suite d'opérations qui composent la fonction sécurisée. Ladite au moins une opération d'une troisième partie de la suite d'opérations est mise en œuvre dans le calcul (étape E500) du message de sortie à partir de la donnée résultat, typiquement par le deuxième module du système 1.

On notera que l'étape de calcul (E110) d'au moins une autre donnée de traitement par l'implémentation en boîte blanche peut consister en la mise en œuvre d'une quatrième partie de la suite d'opérations qui composent la fonction sécurisée.

Typiquement, l'application d'une deuxième autre fonction au message d'entrée, à une deuxième partie du message d'entrée, à la donnée de traitement ou à une première partie de la donnée de traitement consiste en ladite quatrième partie de la suite d'opérations qui composent la fonction sécurisée.

La quatrième partie de la suite d'opérations qui composent la fonction sécurisée, comporte au moins une opération de ladite suite d'opérations qui composent la fonction sécurisée.

La quatrième partie de la suite d'opérations qui composent la fonction sécurisée est typiquement disjointe de la première partie de ladite suite d'opérations, de la deuxième partie de ladite suite d'opérations, et de la troisième parties décrites ci-avant.

La figure 3 illustre un exemple de fonction sécurisée effectuée par un procédé ou un système selon l'invention.

La fonction sécurisée illustrée dans cette figure met en correspondance un message d'entrée I avec un message de sortie O, et permet l'exécution d'un algorithme de chiffrement symétrique Eₖ avec une clé cryptographique prédéterminée K, ladite exécution étant sécurisée contre les fautes en utilisant une contremesure infective.

La fonction sécurisée comprend l'obtention d'un premier résultat provisoire par une première exécution du chiffrement Eₖ appliqué au message d'entrée I, et l'obtention d'un deuxième résultat provisoire par une première exécution d'une fonction de diffusion D_{R} appliquée au premier résultat provisoire.

La fonction sécurisée comprend également l'obtention d'un troisième résultat provisoire par une deuxième exécution du chiffrement Eₖ appliqué au message d'entrée I, et l'obtention d'un quatrième résultat provisoire par une deuxième exécution de la fonction de diffusion D_{R} appliquée au troisième résultat provisoire.

La fonction sécurisée obtient alors le message de sortie O par une combinaison de type « ou exclusif » entre le deuxième résultat provisoire, le quatrième résultat provisoire et un autre résultat provisoire parmi le premier résultat provisoire et le troisième résultat provisoire.

La fonction de diffusion D_{R} est typiquement une fonction de hachage paramétrée avec une valeur R. La fonction sécurisée illustrée dans la figure 3 est décrite dans le document « A high-Order infective Countermeasure Framework », Guillaume Barbu ; Luk Bettale ; Laurent Castelnovi ; Thomas Chabrier ; Nicolas Debande ; Christophe Giraud ; Nathan Reboud, DOI : 10. 1109/FDTC53659.2021.00012.

Un exemple de procédé selon l'invention, pour effectuer cette fonction sécurisée, consiste en ce que les deux exécutions du chiffrement Eₖ et une des exécutions de la fonction de diffusion D_{R} sont mises en œuvre par l'implémentation en boîte blanche, typiquement pendant l'étape de calcul d'une donnée de traitement (étape E100) et l'étape de calcul d'au moins une autre donnée de traitement (étape E110).

L'autre donnée de traitement comprend le premier résultat provisoire ou le troisième résultat provisoire.

Si l'implémentation en boîte blanche met en œuvre la première exécution de la fonction de diffusion D_{R}, la donnée de traitement comprend le troisième résultat provisoire et la valeur R, l'autre donnée de traitement comprend en outre le deuxième résultat provisoire, la fonction intermédiaire est la fonction de diffusion, et la donnée résultat est le quatrième résultat provisoire.

Si l'implémentation en boîte blanche met en œuvre la deuxième exécution de la fonction de diffusion D_{R}, la donnée de traitement comprend le premier résultat provisoire et la valeur R, l'autre donnée de traitement comprend en outre le quatrième résultat provisoire, la fonction intermédiaire est la fonction de diffusion et la donnée résultat est le deuxième résultat provisoire.

Le calcul (étape E500) du message de sortie à partir de la donnée résultat est alors mis en œuvre par la deuxième partie de l'implémentation en boite blanche, et obtient le message de sortie par la combinaison de type « ou exclusif » du deuxième résultat provisoire, du quatrième résultat provisoire et d'un autre résultat provisoire parmi le premier résultat provisoire et le troisième résultat provisoire, l'autre résultat provisoire étant le premier résultat provisoire, ou le troisième résultat provisoire, compris dans l'autre donnée de traitement.

Selon une variante de cet exemple, l'autre donnée de traitement a pour valeur la combinaison par « ou exclusif » d'un résultat provisoire parmi le premier résultat provisoire ou le troisième résultat provisoire, avec le deuxième résultat provisoire si l'implémentation en boîte blanche met en œuvre la première exécution de la fonction de diffusion D_{R}, ou avec le quatrième résultat provisoire si l'implémentation en boîte blanche met en œuvre la deuxième exécution de la fonction de diffusion D_{R}, et le calcul (étape E500) du message de sortie à partir de la donnée résultat obtient le message de sortie par la combinaison de type « ou exclusif » entre la donnée résultat et l'autre donnée de traitement.

Un homme du métier comprendra que les modes de réalisation, variantes, et différentes caractéristiques, décrits ci-avant peuvent être associées les unes avec les autres selon diverses combinaisons dans la mesure où elles ne sont pas incompatibles ou exclusives les unes des autres.

## Revendications

1. Procédé pour effectuer une fonction sécurisée mettant en correspondance un message d'entrée avec un message de sortie, le procédé étant mis en œuvre par un système (1) comprenant un élément sécurisé (3) et une implémentation en boîte blanche dans un environnement d'exécution non sécurisé (2), le procédé comprenant les étapes suivantes :
- calcul (E100) d'une donnée de traitement à partir du message d'entrée par l'implémentation en boîte blanche,
- chiffrement (E200) , par l'implémentation en boîte blanche, de la donnée de traitement en utilisant une clé de chiffrement d'un algorithme asymétrique de chiffrement fonctionnel,
- envoi (E300) de la donnée de traitement chiffrée à l'élément sécurisé,
- obtention (E400) par l'élément sécurisé d'une donnée résultat à partir de la donnée de traitement chiffrée et d'une clé de déchiffrement associée à la clé de chiffrement, la donnée résultat étant l'image de la donnée de traitement par une fonction intermédiaire différente de la fonction identité,
- calcul (E500) du message de sortie à partir de la donnée résultat,
et où :
l'obtention (E400) par l'élément sécurisé (3) de la donnée résultat, est par déchiffrement fonctionnel de la donnée de traitement chiffrée en utilisant une clé de déchiffrement fonctionnel pour la fonction intermédiaire, la clé de déchiffrement étant ladite clé de déchiffrement fonctionnel pour la fonction intermédiaire.

2. Procédé pour effectuer une fonction sécurisée selon la revendication précédente dans lequel le message de sortie comprend la donnée résultat.

3. Procédé pour effectuer une fonction sécurisée selon l'une quelconque des revendications précédentes,
- le procédé comprenant en outre une étape de calcul (E110) d'au moins une autre donnée de traitement par l'implémentation en boîte blanche,
- et le message de sortie comprenant en outre l'autre donnée de traitement.

4. Procédé pour effectuer une fonction sécurisée selon la revendication 1 dans lequel :
- l'implémentation en boite blanche a une première partie et une deuxième partie ;
- le calcul (E100) d'une donnée de traitement à partir du message d'entrée et le chiffrement (E200) de la donnée de traitement en utilisant une clé de chiffrement, sont mis en œuvre par la première partie de l'implémentation en boite blanche ;
- le calcul (E500) du message de sortie à partir de la donnée résultat est mis en œuvre par la deuxième partie de l'implémentation en boite blanche ;
le procédé comprenant en outre une étape d'envoi de la donnée résultat à la deuxième partie de l'implémentation en boite blanche.

5. Procédé pour effectuer une fonction sécurisée selon la revendication précédente, le procédé comprenant en outre :
- le calcul (E110) d'au moins une autre donnée de traitement par la première partie de l'implémentation en boîte blanche, et
- l'utilisation de l'au moins une autre donnée de traitement par la deuxième partie de l'implémentation en boîte blanche pour le calcul du message de sortie à partir de la donnée résultat.

6. Procédé pour effectuer une fonction sécurisée selon l'une quelconque des revendications précédentes dans lequel la clé de chiffrement est une clé publique d'un algorithme RSA et la clé de déchiffrement fonctionnel est obtenue à partir d'une clé privée dudit algorithme RSA, la clé privé étant associée à la clé publique, l'algorithme RSA ayant un module de chiffrement déterminé et la fonction intermédiaire étant une exponentiation modulaire élevant la donnée de traitement à un exposant déterminé modulo le module de chiffrement déterminé.

7. Procédé pour effectuer une fonction sécurisée selon la revendication précédente dans lequel la clé de chiffrement comprend un exposant de chiffrement et la clé de déchiffrement fonctionnel comprend un inverse modulaire de l'exposant de chiffrement et l'exposant déterminé, ou le résultat du produit de l'exposant de chiffrement par l'exposant déterminé.

8. Procédé pour effectuer une fonction sécurisée selon l'une quelconque des revendications précédentes dans lequel :
- la clé de chiffrement n'intervient que dans l'étape (E200) de chiffrement de la donnée de traitement par l'implémentation en boîte blanche, et
- la clé de déchiffrement n'intervient que dans l'étape d'obtention (E400) d'une donnée résultat par l'élément sécurisé.

9. Procédé pour effectuer une fonction sécurisée selon l'une quelconque des revendications précédentes dans lequel la fonction sécurisée se compose d'une suite d'opérations et la fonction intermédiaire est une partie de ladite suite d'opérations.

10. Procédé pour effectuer une fonction sécurisée selon l'une quelconque des revendications précédentes dans lequel la fonction sécurisée est une fonction cryptographique mettant en correspondance le message d'entrée avec le message de sortie à l'aide d'une clé cryptographique prédéterminée.

11. Procédé pour effectuer une fonction sécurisée selon la revendication précédente dans lequel la clé cryptographique prédéterminée est une clé distincte de la clé de chiffrement et de la clé de déchiffrement.

12. Système (1) pour effectuer une fonction sécurisée mettant en correspondance un message d'entrée avec un message de sortie, le système comprenant :
- un premier composant comprenant tout ou partie d'une implémentation en boite blanche dans un environnement d'exécution non sécurisé (2), ladite toute ou partie de l'implémentation en boite blanche étant configurée pour calculer une donnée de traitement à partir du message d'entrée et chiffrer la donnée de traitement en utilisant une clé de chiffrement d'un algorithme asymétrique de chiffrement fonctionnel,
- un élément sécurisé (3) configuré pour recevoir la donnée de traitement chiffrée et obtenir une donnée résultat à partir de la donnée de traitement chiffrée et d'une clé de déchiffrement associée à la clé de chiffrement, la donnée résultat étant l'image de la donnée de traitement par une fonction intermédiaire différente de la fonction identité,
- un deuxième composant configuré pour recevoir la donnée résultat et calculer le message de sortie à partir de la donnée résultat,
l'obtention par l'élément sécurisé (3) de la donnée résultat, étant par déchiffrement fonctionnel de la donnée de traitement chiffrée en utilisant une clé de déchiffrement fonctionnel pour la fonction intermédiaire, la clé de déchiffrement étant ladite clé de déchiffrement fonctionnel pour la fonction intermédiaire.

13. Système (1) pour effectuer une fonction sécurisée selon la revendication précédente, dans lequel le message de sortie comprend la donnée résultat.

14. Système (1) pour effectuer une fonction sécurisée selon la revendication 12, dans lequel :
- l'implémentation en boite blanche a une première partie et une deuxième partie ;
- ladite toute ou partie de l'implémentation en boite blanche du premier composant est la première partie de l'implémentation en boite blanche ;
- le deuxième composant comprend la deuxième partie de l'implémentation en boite blanche dans l' environnement d'exécution non sécurisé (2), la deuxième partie de l'implémentation en boite blanche étant configurée pour recevoir la donnée résultat et calculer le message de sortie à partir de la donnée résultat.

## Patentansprüche

1. Verfahren zum Ausführen einer sicheren Funktion, die eine Eingangsnachricht mit einer Ausgangsnachricht abgleicht, wobei das Verfahren von einem System (1) durchgeführt wird, das ein sicheres Element (3) und eine White-Box-Implementierung in einer nicht sicheren Ausführungsumgebung (2) umfasst, wobei das Verfahren die folgenden Schritte umfasst:
- Berechnen (E100) eines Verarbeitungsdatenelements ausgehend von der Eingangsnachricht durch die White-Box-Implementierung,
- Verschlüsselung (E200), durch die White-Box-Implementierung, des Verarbeitungsdatenelements unter Verwendung eines Verschlüsselungsschlüssels eines asymmetrischen funktionellen Verschlüsselungsalgorithmus,
- Senden (E300) des verschlüsselten Verarbeitungsdatenelements an das sichere Element,
- Erhalten (E400), durch das sichere Element, eines Ergebnisdatenelements ausgehend von dem verschlüsselten Verarbeitungsdatenelement und einem Entschlüsselungsschlüssel, der dem Verschlüsselungsschlüssel zugeordnet ist, wobei das Ergebnisdatenelement die Abbildung des Verarbeitungsdatenelements durch eine von der Identitätsfunktion verschiedene Zwischenfunktion ist,
- Berechnen (E500) der Ausgangsnachricht ausgehend von dem Ergebnisdatenelement;
und wobei:
das Erhalten (E400), durch das sichere Element (3), des Ergebnisdatenelements durch funktionelle Entschlüsselung des verschlüsselten Verarbeitungsdatenelements unter Verwendung eines funktionellen Entschlüsselungsschlüssels für die Zwischenfunktion erfolgt, wobei der Entschlüsselungsschlüssel der funktionelle Entschlüsselungsschlüssel für die Zwischenfunktion ist.

2. Verfahren zum Ausführen einer sicheren Funktion nach dem vorhergehenden Anspruch, wobei die Ausgangsnachricht das Ergebnisdatenelement umfasst.

3. Verfahren zum Ausführen einer sicheren Funktion nach einem der vorhergehenden Ansprüche,
- wobei das Verfahren ferner einen Schritt des Berechnens (E110) mindestens eines weiteren Verarbeitungsdatenelements durch die White-Box-Implementierung umfasst,
- und wobei die Ausgangsnachricht ferner das weitere Verarbeitungsdatenelement umfasst.

4. Verfahren zum Ausführen einer sicheren Funktion nach Anspruch 1, wobei:
- die White-Box-Implementierung einen ersten und einen zweiten Teil hat;
- das Berechnen (E100) eines Verarbeitungsdatenelements ausgehend von der Eingangsnachricht und das Verschlüsseln (E200) des Verarbeitungsdatenelements unter Verwendung eines Verschlüsselungsschlüssels durch den ersten Teil der White-Box-Implementierung durchgeführt werden;
- das Berechnen (E500) der Ausgangsnachricht ausgehend von dem Ergebnisdatenelement durch den zweiten Teil der White-Box-Implementierung durchgeführt wird; wobei das Verfahren ferner einen Schritt des Sendens des Ergebnisdatenelements an den zweiten Teil der White-Box-Implementierung umfasst.

5. Verfahren zum Ausführen einer sicheren Funktion nach dem vorhergehenden Anspruch, wobei das Verfahren ferner umfasst:
- das Berechnen (E110) mindestens eines weiteren Verarbeitungsdatenelements durch den ersten Teil der White-Box-Implementierung, und
- das Verwenden des mindestens einen weiteren Verarbeitungsdatenelements durch den zweiten Teil der White-Box-Implementierung zum Berechnen der Ausgangsnachricht ausgehend von dem Ergebnisdatenelement.

6. Verfahren zum Ausführen einer sicheren Funktion nach einem der vorhergehenden Ansprüche, wobei der Verschlüsselungsschlüssel ein öffentlicher Schlüssel eines RSA-Algorithmus ist und der funktionelle Entschlüsselungsschlüssel ausgehend von einem privaten Schlüssel des RSA-Algorithmus erhalten wird, wobei der private Schlüssel dem öffentlichen Schlüssel zugeordnet ist, wobei der RSA-Algorithmus ein bestimmtes Verschlüsselungsmodul aufweist und wobei die Zwischenfunktion eine modulare Exponentiation ist, die das Verarbeitungsdatenelement in einen bestimmten Exponenten modulo dem bestimmten Verschlüsselungsmodul hebt.

7. Verfahren zum Ausführen einer sicheren Funktion nach dem vorhergehenden Anspruch, wobei der Verschlüsselungsschlüssel einen Verschlüsselungsexponenten umfasst und der funktionelle Entschlüsselungsschlüssel eine modulare Inverse des Verschlüsselungsexponenten und den bestimmten Exponenten oder das Ergebnis des Produkts aus dem Verschlüsselungsexponenten und dem bestimmten Exponenten umfasst.

8. Verfahren zum Ausführen einer sicheren Funktion nach einem der vorhergehenden Ansprüche, wobei:
- der Verschlüsselungsschlüssel nur beim Schritt (E200) des Verschlüsselns des Verarbeitungsdatenelements durch die White-Box-Implementierung beteiligt ist, und
- der Entschlüsselungsschlüssel nur beim Schritt des Erhaltens (E400) eines Ergebnisdatenelements durch das sichere Element beteiligt ist.

9. Verfahren zum Ausführen einer sicheren Funktion nach einem der vorhergehenden Ansprüche, wobei sich die sichere Funktion aus einer Folge von Operationen zusammensetzt und die Zwischenfunktion ein Teil der Folge von Operationen ist.

10. Verfahren zum Ausführen einer sicheren Funktion nach einem der vorhergehenden Ansprüche, wobei die sichere Funktion eine kryptografische Funktion ist, die die Eingangsnachricht mit der Ausgangsnachricht mithilfe eines vorbestimmten kryptografischen Schlüssels abgleicht.

11. Verfahren zum Ausführen einer sicheren Funktion nach dem vorhergehenden Anspruch, wobei der vorbestimmte kryptografische Schlüssel ein Schlüssel ist, der von dem Verschlüsselungsschlüssel und von dem Entschlüsselungsschlüssel verschieden ist.

12. System (1) zum Ausführen einer sicheren Funktion, das eine Eingangsnachricht und eine Ausgangsnachricht abgleicht, wobei das System Folgendes umfasst:
- eine erste Komponente, die die gesamte oder einen Teil einer White-Box-Implementierung in einer nicht sicheren Ausführungsumgebung (2) umfasst, wobei die gesamte oder der Teil der White-Box-Implementierung dazu ausgelegt ist, ein Verarbeitungsdatenelement ausgehend von der Eingangsnachricht zu berechnen und das Verarbeitungsdatenelement unter Verwendung eines Verschlüsselungsschlüssels eines asymmetrischen funktionellen Verschlüsselungsalgorithmus zu verschlüsseln,
- ein sicheres Element (3), das dazu ausgelegt ist, das verschlüsselte Verarbeitungsdatenelement zu empfangen und ein Ergebnisdatenelement ausgehend von dem verschlüsselten Verarbeitungsdatenelement und einem Entschlüsselungsschlüssel, der dem Verschlüsselungsschlüssel zugeordnet ist, zu erhalten, wobei das Ergebnisdatenelement die Abbildung des Verarbeitungsdatenelements durch eine von der Identitätsfunktion verschiedene Zwischenfunktion ist,
- eine zweite Komponente, die dazu ausgelegt ist, das Ergebnisdatenelement zu empfangen und die Ausgangsnachricht ausgehend von dem Ergebnisdatenelement zu berechnen, wobei das Erhalten, durch das sichere Element (3), des Ergebnisdatenelements durch funktionelle Entschlüsselung des verschlüsselten Verarbeitungsdatenelements unter Verwendung eines funktionellen Entschlüsselungsschlüssels für die Zwischenfunktion erfolgt, wobei der Entschlüsselungsschlüssel der funktionelle Entschlüsselungsschlüssel für die Zwischenfunktion ist.

13. System (1) zum Ausführen einer sicheren Funktion nach dem vorhergehenden Anspruch, wobei die Ausgangsnachricht das Ergebnisdatenelement umfasst.

14. System (1) zum Ausführen einer sicheren Funktion nach Anspruch 12, wobei:
- die White-Box-Implementierung einen ersten und einen zweiten Teil hat;
- die gesamte oder ein Teil der White-Box-Implementierung der ersten Komponente der erste Teil der White-Box-Implementierung ist;
- die zweite Komponente den zweiten Teil der White-Box-Implementierung in der nicht sicheren Ausführungsumgebung (2) umfasst, wobei der zweite Teil der White-Box-Implementierung dazu ausgelegt ist, das Ergebnisdatenelement zu empfangen und die Ausgangsnachricht ausgehend von dem Ergebnisdatenelement zu berechnen.

## Claims

1. Method for performing a secure function matching an input message to an output message, the method being implemented by a system (1) comprising a secure element (3) and a white-box implementation in an insecure execution environment (2), the method comprising the following steps:
- the white-box implementation computing (E100) a processing datum on the basis of the input message,
- the white-box implementation encrypting (E200) the processing datum using an encryption key of an asymmetric functional encryption algorithm,
- sending (E300) the encrypted processing datum to the secure element,
- the secure element obtaining (E400) a result datum on the basis of the encrypted processing datum and a decryption key associated with the encryption key, the result datum being the image of the processing datum by an intermediate function which is different from the identity function,
- computing (E500) the output message on the basis of the result datum,
and where:
the secure element (3) obtains (E400) the result datum by functionally decrypting the encrypted processing datum using a functional decryption key for the intermediate function, the decryption key being said functional decryption key for the intermediate function.

2. Method for performing a secure function according to the preceding claim, wherein the output message comprises the result datum.

3. Method for performing a secure function according to either one of the preceding claims,
- the method further comprising a step of the white-box implementation computing (E110) at least one other processing datum,
- and the output message further comprising the other processing datum.

4. Method for performing a secure function according to Claim 1, wherein:
- the white-box implementation has a first part and a second part;
- the computation (E100) of a processing datum on the basis of the input message and the encryption (E200) of the processing datum using an encryption key are implemented by the first part of the white-box implementation;
- the computation (E500) of the output message on the basis of the result datum is implemented by the second part of the white-box implementation;
the method further comprising a step of sending the result datum to the second part of the white-box implementation.

5. Method for performing a secure function according to the preceding claim, the method further comprising:
- the first part of the white-box implementation computing (E110) at least one other processing datum, and
- the second part of the white-box implementation using the at least one other processing datum to compute the output message on the basis of the result datum.

6. Method for performing a secure function according to any one of the preceding claims, wherein the encryption key is a public key of an RSA algorithm and the functional decryption key is obtained on the basis of a private key of said RSA algorithm, the private key being associated with the public key, the RSA algorithm having a determined encryption module and the intermediate function being a modular exponentiation raising the processing datum to a determined exponent modulo the determined encryption module.

7. Method for performing a secure function according to the preceding claim, wherein the encryption key comprises an encryption exponent and the functional decryption key comprises a modular inverse of the encryption exponent and the determined exponent, or the result of the product of the encryption exponent and the determined exponent.

8. Method for performing a secure function according to any one of the preceding claims, wherein:
- the encryption key intervenes only in the step (E200) of the white-box implementation encrypting the processing datum, and
- the decryption key intervenes only in the step of the secure element obtaining (E400) a result datum.

9. Method for performing a secure function according to any one of the preceding claims, wherein the secure function is composed of a sequence of operations and the intermediate function is a part of said sequence of operations.

10. Method for performing a secure function according to any one of the preceding claims, wherein the secure function is a cryptographic function matching the input message to the output message using a predetermined cryptographic key.

11. Method for performing a secure function according to the preceding claim, wherein the predetermined cryptographic key is a key which is distinct from the encryption key and from the decryption key.

12. System (1) for performing a secure function matching an input message to an output message, the system comprising:
- a first component comprising all or part of a white-box implementation in an insecure execution environment (2), said all or part of the white-box implementation being configured to compute a processing datum on the basis of the input message and encrypt the processing datum using an encryption key of an asymmetric functional encryption algorithm,
- a secure element (3) configured to receive the encrypted processing datum and obtain a result datum on the basis of the encrypted processing datum and of a decryption key associated with the encryption key, the result datum being the image of the processing datum by an intermediate function which is different from the identity function,
- a second component configured to receive the result datum and compute the output message on the basis of the result datum, the secure element (3) obtaining the result datum by functionally decrypting the encrypted processing datum using a functional decryption key for the intermediate function, the decryption key being said functional decryption key for the intermediate function.

13. System (1) for performing a secure function according to the preceding claim, wherein the output message comprises the result datum.

14. System (1) for performing a secure function according to Claim 12, wherein:
- the white-box implementation has a first part and a second part;
- said all or part of the white-box implementation of the first component is the first part of the white-box implementation;
- the second component comprises the second part of the white-box implementation in the insecure execution environment (2), the second part of the white-box implementation being configured to receive the result datum and compute the output message on the basis of the result datum.
